Europäisches Patentamt

(19) European Patent Office

Office européen des brevets

(11) Numéro de publication : **0 020 985**
**B1**

(12) **FASCICULE DE BREVET EUROPÉEN**

(45) Date de publication du fascicule du brevet :
17.10.84

(51) Int. Cl.³ : **G 09 G   1/02**, G 06 F 15/20

(21) Numéro de dépôt : 80102583.4

(22) Date de dépôt : 09.05.80

(54) **Système de traitement de texte à affichage sur tube cathodique.**

(30) Priorité : 11.06.79 US 47435

(43) Date de publication de la demande :
07.01.81 Bulletin 81/01

(45) Mention de la délivrance du brevet :
17.10.84 Bulletin 84/42

(84) Etats contractants désignés :
DE FR GB

(56) Documents cités :
US-A- 3 816 823
US-A- 3 939 458

(73) Titulaire : **International Business Machines Corpor-ation**
**Old Orchard Road**
**Armonk, N.Y. 10504 (US)**

(72) Inventeur : **Hamilton, Douglas Alan**
**11708 Sterlinghill Dr.**
**Austin Texas 78758 (US)**
Inventeur : **Herrold, Paul Ray**
**11707 Knollpark Dr.**
**Austin Texas 78758 (US)**

(74) Mandataire : **Bonneau, Gérard**
**Compagnie IBM France Département de Propriété Industrielle**
**F-06610 La Gaude (FR)**

EP 0 020 985 B1

Jouve, 18, rue St-Denis, 75001 Paris, France

## Description

Domaine technique

La présente invention concerne les systèmes de traitement et d'affichage de texte et, plus particulièrement, un système de traitement de texte à affichage sur tube cathodique (CRT) dans lequel un bloc de données alpha-numériques pouvant être, par exemple toute une page à afficher doit être maintenue sur le tube d'affichage CRT.

Etat de la technique antérieure

La préparation d'un document d'affaires implique souvent la frappe et l'édition de plusieurs ébauches du document avant que ce dernier ne soit complet, correct et présenté sous une forme qui soit facilement compréhensible et esthétique à l'œil. Les étapes de préparation d'un document imprimé sous sa forme finale exigent souvent : (1) la frappe d'une ébauche à partir de données grossières, d'une dictée ou de notes ; (2) des ratures, des insertions des restructurations et des corrections par un éditeur ; (3) la refrappe en utilisant l'ébauche éditée comme source d'information ; (4) la réédition pour s'assurer des corrections et obtenir la perfection esthétique ; (5) la refrappe telle qu'elle est exigée par l'étape (4) et la réédition pour obtenir une copie finale correcte.

D'après ce qui précède, chaque fois qu'il y a frappe d'information, cette information doit être relue et éventuellement éditée pour s'assurer qu'elle est correcte et, chaque fois qu'elle est éditée, elle doit être refrappée. Ce procédé est extrêmement long, car il y a perte de temps au niveau de la secrétaire, puisqu'il y a refrappe et au niveau de l'éditeur, puisqu'il y a réédition.

L'art antérieur propose plusieurs dispositifs pour diminuer la perte de temps due à la refrappe et la réédition des documents d'affaires. Une approche traditionnelle de l'art antérieur, p. ex. la machine à écrire à bande magnétique IBM72, consiste à enregistrer les caractères frappés sur un second support, par exemple un support magnétique, qui est sélectivement utilisé par la dactylographe pour commander la machine à écrire afin que cette dernière imprime automatiquement en sortie l'information contenue dans la première ébauche avec les changements apportés à l'édition. Depuis quelques années, cette approche traditionnelle est remplacée par des systèmes de traitement de texte qui utilisent un affichage par tube cathodique (CRT), ou des dispositifs semblables, qui affichent l'information introduite par exemple par clavier dans le terminal d'entrée d'un système de traitement de texte. L'information entrée est affichée et l'opérateur peut apporter des corrections aux données ainsi affichées. Ces corrections entraînent, bien entendu, l'entrée de nouvelles données, la suppression de données existantes ou l'insertion de nouvelles données.

Actuellement, les systèmes de traitement de texte autonomes contiennent les éléments électroniques nécessaires pour effectuer l'édition avec affichage cathodique des données introduites au clavier. Ces systèmes d'édition de texte ont, en général, leur propre mémoire de grande capacité dans laquelle les caractères à afficher sont emmagasinés sous une forme quelconque appropriée. Lorsque l'information affichée est supposée être correcte, les données de la mémoire de grande capacité sont transmises à un microprocesseur central qui alors commande l'impression des données en sortie sur une imprimante classique quelconque.

Dans les systèmes de traitement de texte décrits ci-dessus, de nombreuses opérations telles que la tabulation et le retour de chariot impliquent traditionnellement un nombre considérable de calculs chaque fois qu'apparaît un code de tabulation ou de retour de chariot au cours du fonctionnement du système. Par exemple, lorsqu'on rencontre un code de tabulation, le système doit procéder à des calculs élaborés pour déterminer la position de tabulation et ensuite passer à la position où doit reprendre l'impression. Ce calcul implique le balayage d'un moyen d'emmagasinage des positions de tabulation, par exemple, une crémaillère de tabulation, ainsi que des moyens pour faire la corrélation entre cette information et les diverses données relatives aux marges.

Dans l'approche décrite ci-dessus où des caractères sont emmagasinés sur un support secondaire, par exemple sur un support magnétique, durant l'édition, la sortie de la copie éditée, que ce soit sous forme d'ébauche ou de copie finale, sur une imprimante ou une machine à écrire, ne présente aucun problème étant donné que le calcul des données de tabulation et des données de retour de chariot est conforme aux vitesses de fonctionnement de l'équipement qui sont de l'ordre de 20 à 60 caractères par seconde.

Il est à noter que les approches complexes mentionnées ci-dessus mises en jeu dans le calcul des codes de tabulation et de retour de chariot répondent à un besoin de simplifier et de faciliter le plus possible le travail entre l'opératrice et sa machine. C'est ainsi que, dans les systèmes de traitement de texte, les opérations d'entrée par l'opératrice, telles que les opérations de tabulation ou de retour de chariot, sont aussi proches que possibles de celles utilisées depuis près d'un siècle dans les machines à écrire classiques. Ainsi, lorsque sont calculées des fonctions de tabulation ou de retour de chariot, l'opératrice du système de traitement de texte n'a pas grand chose à rajouter aux fonctions de tabulation et de retour de chariot entrées au clavier d'une simple machine à écrire par l'opératrice.

Or, maintenant que des dispositifs d'affichage viennent s'ajouter aux systèmes de traitement de texte, il apparaît vivement avantageux pour l'opératrice de maintenir les entrées de tabulation et de retour de chariot aussi simples et aussi proches que possible des entrées effectuées sur une machine à écrire classique.

Cependant, dans un système de traitement de texte où les entrées de tabulation et de retour de chariot par l'opératrice sont des entrées classiques, les désignations des codes de tabulation et de retour de chariot sont incluses dans la chaîne de données de caractères emmagasinée. Il s'ensuit que le système doit procéder à des calculs relativement longs pour convertir ces codes de tabulation et de retour de chariot en des données de position affichées sur l'écran cathodique.

Malheureusement, dans les systèmes de traitement et d'affichage de texte, le facteur temps joue un rôle critique. Il s'est avéré très difficile, même dans les petits affichages de l'ordre de une à cinq lignes, d'effectuer toutes les opérations de traitement de données nécessaires pour former l'affichage alpha-numérique durant chaque cycle de rafraîchissement. Dans les affichages à tube cathodique afin d'éviter tout clignotement, la cadence de rafraîchissement doit être de l'ordre de 45 hertz. Cela accorde à chaque cycle de rafraîchissement une durée d'environ 22 millisecondes. Avec le développement des systèmes de traitement et d'affichage de texte, le problème s'est aggravé étant donné que ces systèmes exigent des affichages de pages entières qui, bien entendu, font appel à un nombre accru des opérations à effectuer durant le cycle de rafraîchissement de 22 millisecondes. Dans les systèmes de traitement de données, le problème s'est encore aggravé par le besoin d'avoir des affichages cathodiques à espacement proportionnel, compatibles avec les systèmes dans lequels l'impression est à espacement proportionnel c'est-à-dire, dans lesquels les caractères alphanumériques ont une largeur variable. Dans ces systèmes à espacement proportionnel au lieu d'avoir environ cent positions de caractères possibles par ligne d'affichage, il y a plus de sept cent cinquante positions d'échappement possibles qui doivent être prises en compte lors des calculs de position des caractères affichés. Il s'ensuit que les opérations de traitement de données nécessaires pour assurer chaque cycle de rafraîchissement, sont encore plus complexes et longues.

Une approche utilisée pour réduire au minimum le temps de traitement des données durant les cycles de rafraîchissement consiste à structurer (mettre au format) une mémoire matricielle de sorte qu'elle ait toutes les positions de caractères possibles de l'affichage CRT et à emmagasiner à chaque position de caractère suffisamment de données pour identifier à cette position le caractère ou l'absence de caractère ainsi que son attribut associé. Tandis que cette approche offre une solution acceptable au temps de rafraîchissement nécessaire et au système employant des affichages relativement petits de l'ordre de 1 à 5

lignes, elle s'avère encombrante et dispendieuse dans les systèmes de traitement et d'affichage de texte traitant des pages entières. Le système exige environ un multiplet de données à chaque position d'emmagasinage soit environ 100 × 70 c'est-à-dire 7 000 multiplets de données à chaque page entière affichée.

Exposé de l'invention

L'objectif de la présente invention est donc un système de traitement de texte à affichage de données alpha-numériques sous forme de pages entières ayant une fréquence de rafraîchissement qui évite tout clignotement de l'affichage tout en utilisant une capacité d'emmagasinage réduite à un minimum.

Cet objectif est satisfait en utilisant un système de traitement de texte par affichage comprenait un clavier pour entrer initialement un texte formé de caractères et ensuite apporter des modifications à ce texte, un tube cathodique dans lequel les caractères sont formés et rafraîchis périodiquement suivant une séquence de positions sélectionnées sur plusieurs lignes, des moyens de déflexion pour déplacer le faisceau du tube cathodique sur ladite séquence de positions sélectionnées en référence à un premier et à un second axes de coordonnées, des moyens de définition de caractère pour commander les moyens de déflexion à chaque position sélectionnée selon une configuration représentant un caractère sélectionné, une mémoire de texte pour emmagasiner la suite des représentations codées des caractères de texte ainsi que des codes de contrôle lorsqu'ils sont entrés initialement au clavier ou lorsque des corrections sont apportées au texte également par l'intermédiaire du clavier, et des moyens de décodage pour, en réponse au décodage de la représentation codée d'un caractère dans la mémoire de texte, engendrer des signaux représentant un caractère sélectionné et appliquer ces signaux aux moyens de définition de caractère. Le système de l'invention comprend des moyens de position et de calcul qui, en réponse au décodage par les moyens de décodage d'un code de tabulation emmagasiné dans la mémoire de texte, calculent la position de tabulation du caractère suivant à afficher par rapport au premier axe de coordonnée, uniquement durant le cycle initial pendant lequel sont formés ou corrigés les caractères du texte, et une mémoire d'instructions d'affichage pour emmagasiner, durant un cycle de prébalayage faisant suite au cycle initial une instruction de commande pour chacune des positions de tabulation calculées pendant le cycle initial. Lesdits moyens de décodage provoquent, lors du décodage d'un code de tabulation dans la mémoire de texte uniquement pendant les cycles de rafraîchissement, l'accès par les moyens de position et de calcul à l'instruction de commande correspondante se trouvant dans la mémoire d'instructions d'affichage de façon à engendrer des signaux représentant le caractère suivant à la position de tabulation définie par le code de tabulation.

Les moyens de position et de calcul du système de la présente invention calculent également, en réponse au décodage d'un code de retour de chariot, la position du caractère suivant à afficher par rapport aux premier et second axes de coordonnées la mémoire d'instructions d'affichage emmagasine alors durant le cycle de prébalayage, une instruction de commande pour chacune des positions de retour de chariot, et les moyens de décodage provoquent lors du décodage d'un code de retour de chariot uniquement pendant les cycles de rafraîchissement, l'accès par les moyens de position et de calcul à l'instruction de commande correspondante se trouvant dans la mémoire d'instructions d'affichage de façon à engendrer des signaux représentant le caractère suivant à afficher à la position définie par le code de retour de chariot.

Brève description des figures

La Figure 1 représente schématiquement un diagramme de fonctionnement général du système de la présente invention.

La Figure 2 représente un schéma plus détaillé de la logique représentée sur la Figure 1.

La Figure 3 représente un schéma montrant les impulsions d'horloge P1, P2 et P3 utilisées pour mesurer le temps des diverses opérations intervenant dans le fonctionnement de la logique de la Figure 2.

La Figure 4 représente un affichage alpha-numérique donné comme exemple pour illustrer le fonctionnement du système.

La Figure 5 représente un schéma de la séquence des instructions emmagasinées dans la mémoire tampon de texte, nécessaires pour produire l'affichage alpha-numérique représenté sur la Figure 4.

La Figure 6 représente schématiquement la séquence des instructions emmagasinées dans la mémoire tampon d'instructions d'affichage nécessaires à l'opération de balayage préalable des données alpha-numériques de l'affichage de la Figure 4.

La Figure 7 représente schématiquement la séquence des instructions emmagasinées dans la mémoire tampon d'instructions d'affichage durant le rafraîchissement afin de maintenir l'affichage alpha-numérique représenté sur la Figure 4.

Mode de réalisation préféré de l'invention

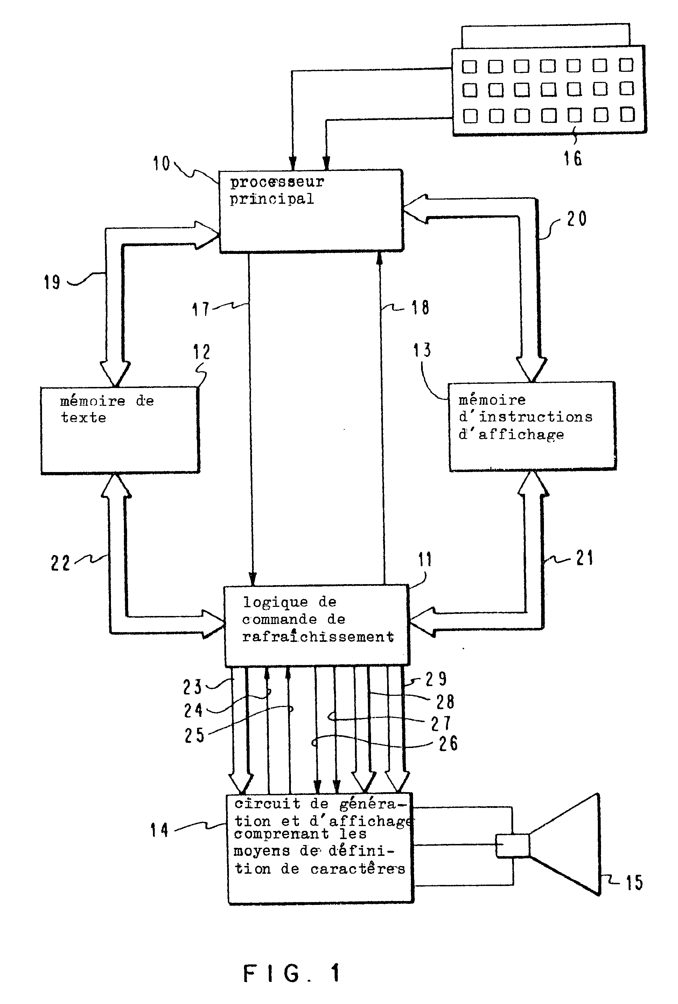

Dans la description du mode de réalisation de la présente invention, on va tout d'abord décrire le système d'après l'invention, description qui sera suivie des opérations impliquées dans le système. Le système représenté de façon très schématique sur la Figure 1 peut être divisé en cinq composants principaux, à savoir, le processeur principal 10, la logique de commande de rafraîchissement 11, les unités de mémoire servant de mémoire tampon, c'est-à-dire, la mémoire tampon de texte 12 qui emmagasine le texte à afficher et la mémoire tampon d'instructions d'affichage 13 qui emmagasine diverses instructions d'affichage associées au texte à afficher et les circuits de génération et d'affichage de caractères 14 qui commandent directement le balayage du tube cathodique CRT 15.

Le processeur principal 10 peut être un microprocesseur classique disponible dans le commerce, dont le rôle consiste à recevoir les données d'entrée provenant généralement de la frappe au clavier par l'opératrice et à emmagasiner ces données dans la mémoire tampon de texte 12. On suppose que lorsque l'information alpha-numérique est affichée sur le tube cathodique CRT 15, l'opératrice entre, par l'intermédiaire du clavier 16, de nouveaux caractères. Pour emmagasiner ces caractères dans la mémoire tampon de texte 12, il faut tout d'abord arrêter la commande de rafraîchissement du tube cathodique. Cette opération se fait à l'aide du processeur principal qui engendre et maintient un signal sur la ligne d'arrêt de demande 17 et qui attend une réponse provenant de la logique de commande de rafraîchissement 11 sur la ligne d'arrêt 18. Lorsque ce cas se présente, le microprocesseur principal 10 remet à jour la mémoire tampon de texte 12, par l'entremise du bus 19, afin d'emmagasiner les nouveaux caractères à leur position appropriée ; en outre, le processeur 10 initialise la mémoire tampon d'instructions d'affichage 13, par l'entremise du bus 20. Le microprocesseur principal 10 libère les circuits électroniques de rafraîchissement de leur état d'arrêt en supprimant la sortie provenant de la ligne d'arrêt de demande 17. A ce stade, l'appareil sous la commande de la mémoire tampon d'instructions d'affichage procède à un balayage initial des données emmagasinées à afficher, balayage qui peut être dénommé prébalayage, au cours duquel sont effectués et emmagasinés tous les calculs de tabulation et/ou de retour de chariot.

Dans le système général représenté sur la Figure 1, la mémoire tampon de texte contient les représentations codées des caractères alpha-numériques à afficher tandis que la mémoire tampon d'instructions d'affichage 13 contient la séquence des instructions qui vont commander la mise en séquence des caractères alpha-numériques du texte provenant de la mémoire tampon de texte 12, ainsi que les attributs des caractères alpha-numériques et leur position sur le tube d'affichage CRT. La logique de commande de rafraîchissement 11 remplit les fonctions associées à la recherche et à l'exécution des instructions provenant de la mémoire tampon d'instructions d'affichage 13. Ces instructions qui seront décrites de façon plus détaillée dans la suite en référence aux autres figures sont les suivantes :

des instructions de chargement d'un parmi plusieurs registres pour préciser, par exemple, une nouvelle position horizontale ou verticale sur le tube cathodique, ou l'adresse de l'instruction suivante ou du caractère suivant,

après toute modification des données du texte dans la mémoire tampon de texte, des instructions de re-balayage de la mémoire tampon de texte et de ré-écriture de la mémoire tampon d'instructions d'affichage afin qu'elle reflète l'état de la mémoire tampon de texte,

des instructions conduisant à l'affichage des caractères présents dans la mémoire tampon de texte 12 qui sont indiqués par les moyens d'adressage de la mémoire tampon de texte,

des instructions de mise en service ou au repos des divers modes d'affichage des caractères (attributs de caractère) qu'il s'agisse d'un caractère souligné, éclairé plus fortement ou clignotant,

durant chaque cycle de rafraîchissement, après que tous les caractères ont été rafraîchis et qu'il reste encore un temps disponible avant le début du cycle de rafraîchissement suivant, des instructions qui permettent au tube cathodique d'assumer un état de repos durant cette période de temps, c'est-à-dire, un état durant lequel sera dissipé un minimum d'énergie.

Pour mener à bien ces diverses activités, la mémoire tampon d'instructions d'affichage communique avec la logique de commande de rafraîchissement 11, le long du bus 21, et la logique de commande de rafraîchissement 11 communique avec les circuits de génération et d'affichage de caractères 14, par les connexions suivantes. Lorsque des caractères sont mis en jeu durant un cycle de rafraîchissement, la logique de commande de rafraîchissement 11 active la ligne de segment de caractère 21, ce qui permet aux circuits de génération et d'affichage de caractères de former, suivant des segments de caractère affichés sur le tube cathodique, une séquence de caractères dont les représentations codées sont successivement envoyées depuis la mémoire tampon de texte, par le bus 22, à la logique de commande de rafraîchissement d'où elles sont envoyées aux circuits électroniques 14, par le bus 23. La nature des circuits électroniques de génération et d'affichage de caractères ne fait pas partie de la présente invention, et, de ce fait, ne sera pas décrite plus avant. Des circuits électroniques classiques de génération et d'affichage de segments de caractère pour tube cathodique peuvent être utilisés et peuvent être du type décrit dans le brevet des US-3 609 745.

Il y a deux sorties provenant des circuits de génération et d'affichage de caractères, à savoir, un signal sur la ligne 24 qui indique que le caractère qui a été dernièrement requis pour être rafraîchi par la logique de commande de rafraîchissement 11 est complet, et un signal sur la ligne 25 qui indique que le temps réservé à la période de rafraîchissement minimale est totalement écoulé et que la période de rafraîchissement suivante devrait commencer. Comme cela a été mentionné préalablement, si, durant un cycle de rafraîchissement donné, tous les caractères sont formés avant que n'apparaisse ce signal de fin de période de rafraîchissement, la logique de commande de rafraîchissement 11 applique sur la ligne 27 un signal de repos qui met alors au repos les circuits électroniques 14.

En outre, les données relatives à la position des caractères alpha-numériques affichés sont envoyées à partir de la logique de commande de rafraîchissement, le long du bus 28, et les divers attributs de caractère décrits ci-dessus sont envoyés à partir de la logique de commande de rafraîchissement 11 le long du bus 29.

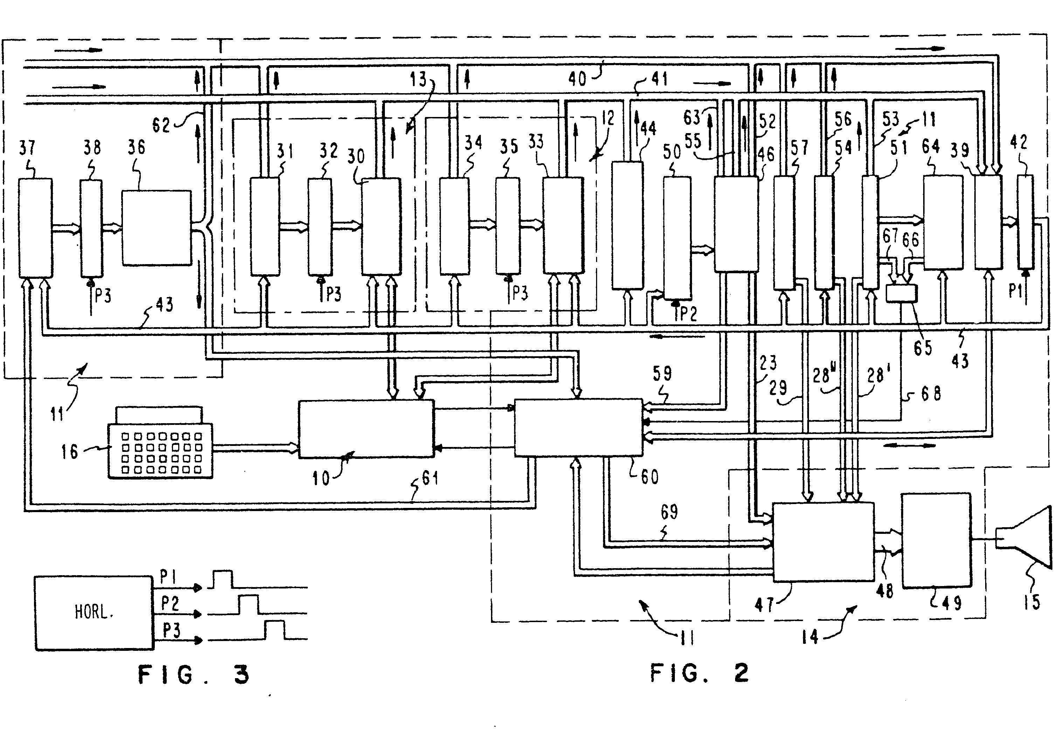

La Figure 2 représente de façon plus détaillée le système représenté sous forme très générale sur la Figure 1. Sur la Figure 2, les unités fonctionnelles sont représentées avec leur logique et sont délimitées par une ligne discontinue ; ces unités logiques, qui ont la même référence que celles utilisées sur la Figure 1, sont le processeur principal 10, la logique de commande de rafraîchissement 11, la mémoire tampon de texte 12, la mémoire tampon d'instructions d'affichage 13, les circuits électroniques de génération et d'affichage de caractères 14 et le tube cathodique CRT 15.

Le processeur principal 10 et la logique de commande de rafraîchissement 11 se partagent les deux mémoires fondamentales du système, à savoir, la mémoire tampon de texte 12 et la mémoire tampon d'instructions d'affichage 13 si bien que le processeur 10 ou la logique 11 peuvent avoir indépendamment accès à chacune d'elles. Comme cela sera décrit de façon plus détaillée dans la suite, le processeur principal ainsi que la logique de commande de rafraîchissement peuvent modifier le contexte de la mémoire tampon d'instructions d'affichage 13. Cependant, seul le processeur principal peut modifier le contenu de la mémoire tampon de texte.

La mémoire tampon d'instructions d'affichage 13 comprend une mémoire d'instructions 30 qui a une largeur de seize bits (ou éléments d'information binaires) dont l'accès se fait par une adresse à seize bits, par le compteur d'adresse 31 et le registre de maintien de polarité à seize bits 32 lequel verrouille l'adresse jusqu'à ce que l'application de l'impulsion d'horloge P3 permette l'envoi de l'adresse du registre 32 à la mémoire d'instructions 30 de manière à indiquer l'instruction suivante. Le texte alpha-numérique est emmagasiné dans la mémoire de texte 33 de la mémoire tampon de texte 12 sous forme de représentations de caractères alpha-numériques codées ayant chacune une largeur d'un multiplet, mémoire dont l'accès se fait par une adresse provenant du compteur d'adresse seize bits 34 par le registre de maintien de polarité 35 lequel exige également une impulsion d'horloge P3 pour indiquer la représentation du caractère suivant dans la mémoire 33.

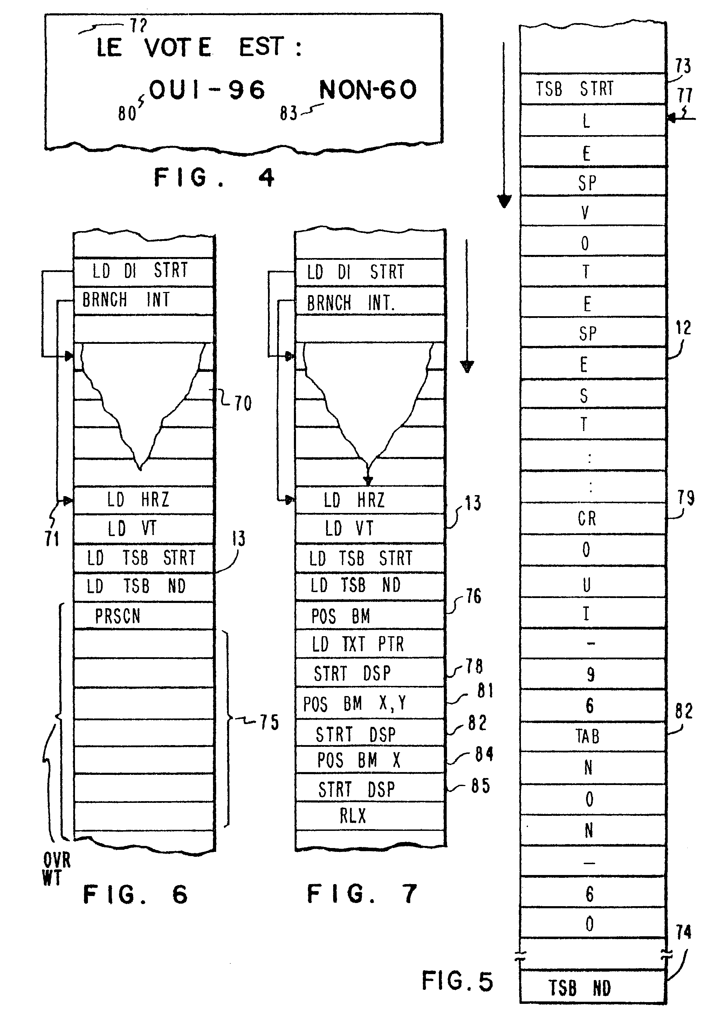

A ce stade du fonctionnement, on va passer à la description de l'horloge représentée sur la Figure 3. Le système de la présente invention est commandé par une horloge à trois phases qui engendrent trois impulsions qui ne se chevauchent pas, P1, P2 et P3. L'impulsion P1 est utilisée pour incrémenter le compteur de micro- programme du système qui va être décrit dans la suite de façon plus détaillée ainsi que pour chronométrer les données introduites dans la mémoire tampon d'ALU qui sera également décrite de façon plus détaillée dans la suite. L'impulsion P2 est utilisée pour charger, ou incrémenter, ou décrémenter divers registres. L'impulsion P3 est utilisée pour charger les mémoires tampon à partir des divers registres et compteurs d'adresses.

La logique de commande de rafraîchissement 11, Figure 2, va maintenant être décrite de façon plus détaillée. Comme cela a été mentionné préalablement, la logique de commande de rafraîchissement remplit les fonctions associées à la recherche et à l'exécution des instructions provenant de la mémoire tampon d'instructions d'affichage. Comme cela sera décrit dans la suite en référence au fonctionnement du système de la présente invention, la logique de commande de rafraîchissement fonctionne non seulement durant le cycle de rafraîchissement mais également durant le cycle initial au cours duquel est formé chacun des caractères à afficher. Etant donné que la mémoire tampon d'instructions d'affichage 13 fonctionne durant la formation initiale du caractère d'une façon différente de celle utilisée durant le cycle de rafraîchissement de caractère, les instructions produites sont différentes, et, par voie de conséquence, la logique de commande de rafraîchissement fonctionne différemment. Dans tous les cas, la logique de commande de rafraîchissement 11, Figure 2, a emmagasinée dans une mémoire permanente 36, une grande variété de groupes de microinstructions agencées de manière à commander l'interaction des divers composants du système représenté sur la Figure 2 de manière à réaliser les instructions obtenues à partir de la mémoire tampon d'instructions d'affichage 13 dans une séquence déterminée par la commande de séquence 60. Dans le mode de réalisation de la présente invention, la mémoire 36 est une mémoire permanente ROS de 256 mots de quarante bits chacun à laquelle sont associés des moyens d'adressage comprenant un compteur à 8 bits, 37 et un registre de maintien de polarité à 8 bits, 38. Le compteur d'adresses et le registre de maintien de polarité fonctionnent de la même façon que celle utilisée par les moyens décrits pour adresser la mémoire d'instructions 30 ou la mémoire de texte 33, c'est-à-dire, que l'application de l'impulsion d'horloge P3 au registre 38 fait que l'adresse appliquée au registre 38 et qui s'y trouve maintenue, indique le multiplet de microinstruction approprié dans la mémoire ROS 36. Tous les calculs de la logique de commande de rafraîchissement sont effectués dans l'unité logique et arithmétique (ALU 39) qui reçoit les données par les bus d'entrée ALU 40 et 41. La sortie de l'unité ALU 39 est verrouillée dans le registre de maintien de polarité à 16 bits 42 par l'application de l'impulsion d'horloge P1 qui fait que les données présentes dans le registre 42 sont envoyées sur le bus de sortie ALU 43.

Le système comprend en outre une mémoire bloc-notes 44 dans laquelle peuvent être emmagasinés de nombreux paramètres temporaires relatifs au texte affiché. Par exemple, dans une mémoire de 8 mots à 16 bits chacun, peuvent être emmagasinés les paramètres tels que : espacement entre les lignes, marge gauche, sous-marge. Tous ces paramètres sont nécessaires pour calculer un retour de chariot, comme cela sera décrit dans la suite.

Une unité de décodage de caractères 46 fonctionne pour décoder ou traduire la représentation codée des caractères alpha-numériques emmagasinés dans la mémoire tampon de texte en une sortie transmise par le bus 23 au générateur de segments de caractère 47 qui, à son tour, engendre et transmet par le bus 48 aux circuits d'affichage 49 du tube CRT, les signaux nécessaires pour activer ces circuits de façon à ce qu'ils tracent le caractère alpha-numérique à afficher sur le tube CRT sous forme d'une série de segments. L'entrée de la représentation codée du caractère à afficher à partir de la mémoire de texte 33 sur l'unité de décodage de caractères 46 passe par le bus d'entrée 41 pour atteindre l'unité ALU 39 à partir de laquelle elle est envoyée au bus de sortie 43 d'où elle est chargée dans le registre de maintien de polarité de code de caractère 50 à partir duquel elle est envoyée dans l'unité de décodage de caractère 46 par une impulsion d'horloge d'entrée P2.

Un registre de positions horizontales à 10 bits 51 garde trace de la position d'échappement. Lorsqu'une opération d'affichage est amorcée, la position horizontale initiale est emmagasinée dans la mémoire d'instructions d'affichage 30. Le chargement de cette position horizontale initiale dans le registre 51 se fait en transmettant la position sur le bus 41 qui passe dans l'unité ALU 39 et dans le registre de sortie 42 pour passer ensuite sur le bus de sortie 43 à partir duquel elle est chargée dans le registre de position horizontale 51. Durant un cycle de rafraîchissement au cours duquel sont affichés les caractères, la position horizontale du caractère est communiquée au générateur de caractères 47, par le bus 28'. Ensuite, une fois que le caractère représenté par le code chargé dans l'unité de décodage de caractères 46 a été affiché ou rafraîchi, l'échappement horizontal est à incrémenter en chargeant la valeur d'échappement du caractère affiché sur le bus 40, par le bus 52, et en ajoutant cette valeur d'échappement à la valeur d'échappement horizontal qui a été appliqué dans l'unité ALU 39, par les bus 53 et 41. Cette valeur remise à jour repasse ensuite à partir de l'unité ALU et de son registre de sortie 42, par le bus 43, dans le registre 51.

Le registre de positions verticales 54 garde trace de la position verticale de l'affichage d'une façon semblable. La position verticale initiale est chargée dans le registre 54 d'une façon semblable à celle utilisée pour charger le registre de positions horizontales 51, c'est-à-dire, la position verticale initiale est transmise depuis la mémoire 30, par l'intermédiaire de l'unité ALU 39 et du registre de sortie 42, au registre de positions verticales 54. Durant un cycle de rafraîchissement des caractères affichés, la position verticale du caractère est communiquée au générateur de caractères 47, par le bus 28″. Ensuite, si à un caractère donné est associé un déplacement vertical, l'unité 46 charge cet incrément vertical par le bus 41 et le bus 55, dans l'unité ALU 39 d'où il est ajouté à la dernière position verticale, ou position en cours provenant du générateur 54 et passant par le bus 56 et le bus 40 pour atteindre l'unité ALU 39 à partir de laquelle la valeur mise à jour est renvoyée par le registre de sortie et le bus 43, au registre de positions verticales 54.

Les représentations codées des divers attributs de caractère, tels que le soulignement, la brillance ou le clignotement d'un caractère qui sont emmagasinés dans la mémoire d'instructions d'affichage 30, sont chargées dans le registre d'attributs de caractère 57 au moment où ils doivent être exécutés. Le chargement du registre d'attributs de caractère 57 se fait par l'unité ALU de la manière décrite préalablement. Le registre 57 qui est un registre à 3 bits contenant le code qui détermine les attributs de caractère, envoie ce code par le bus 29 dans le registre de segments de caractère 47 et aux circuits d'affichage 49 du tube cathodique pour actionner ce dernier suivant le mode d'attribut de caractère requis.

Comme cela a été mentionné préalablement, un aspect important de la présente invention implique des moyens sensibles à un code de tabulation auquel on a eu accès pour calculer la position de tabulation du caractère suivant à afficher uniquement durant le cycle initial au cours duquel est formé chacun des caractères sélectionnés. Cette fonction va maintenant être décrite. On suppose que l'on se trouve dans un cycle initial après un changement de l'information à afficher et que les représentations codées des caractères emmagasinés dans la mémoire de texte 33 sont séquentiellement adressées par le compteur d'adresses 34 et le registre 35 (prébalayage) lorsque la représentation codée suivante est un code de tabulation. Comme toute autre représentation codée adressée, le code de tabulation est envoyé sur le bus 41 pour passer dans l'unité ALU 39 et de là, par le bus 43, dans l'unité de décodage de caractères 46 qui, après détection d'un code de tabulation, transmet un signal représentant un code non graphique spécial sur un bus de fonction spéciale 59 en direction de la logique de commande de séquence qui, en combinaison avec le réseau de microinstructions 36, commande l'exécution des instructions dans le système de la présente invention. Il est à noter que ce signal n'est pas différencié des codes de tabulation et autres codes non graphiques, tels que les codes de retour de chariot.

La logique de commande de séquence 60 signalait ensuite à la mémoire de microinstructions 36, par le bus 61, d'envoyer le champ de données de la microinstruction adressée, simultanément dans l'unité ALU 39, par les bus 62 et 40. En même temps, l'unité de décodage de caractères 46 transmet une valeur à 7 bits spécifiant le code non graphique en tant que tabulation appliquée à l'unité ALU 39, par les bus 63 et 41. L'entrée provenant de l'unité 46 et l'entrée de la mémoire de microinstructions 36, s'ajoutent dans l'unité ALU 39 et le résultat repasse par le bus 43 à la mémoire de microinstructions 36 qui, par l'entremise du compteur d'adresse 37 et du registre 38, indique la séquence de microinstructions alors nécessaire pour calculer la tabulation sur la position de caractère suivante. Dans ce mode de réalisation choisi, la crémaillère de tabulation est considérée comme comprenant un réseau de 128 multiplets séquentiellement accessibles dans lequel un « 1 » binaire sur un bit quelconque indique une position de tabulation particulière (les positions étant à 1 024 bits) à laquelle on aura séquentiellement accès durant le fonctionnement. L'adressage de chaque position de bit se fait en incrémentant le registre de positions horizontales 51 de manière à adresser chacun des 1 024 bits. Le champ de données d'une microinstruction provenant de la mémoire 36 contenant un « 1 » binaire est envoyé par le bus 40 à l'unité ALU 39 où il est combiné à la sortie 53 qui indique la dernière position du registre de positions horizontales 51, sur le bus 41. La sortie de l'unité ALU 39 est verrouillée dans le registre 42 et est ensuite transférée par le bus 43 afin d'être chargée dans le registre de positions horizontales 51 ce qui met fin à l'opération d'incrémentation qui consiste à charger 10 bits dans le registre 51. Les 7 bits d'ordre supérieur du registre 51 indiquent dans la crémaillère de tabulation 64 le premier multiplet dont les 8 bits sont chargés dans un des 8 moyens de sélection 65, par le bus 66. Chacun des 8 bits est ensuite adressé par les 3 bits d'ordre inférieur du registre 51, par le bus 67. Le processus d'incrémentation du registre de positions horizontales 51 décrit préalablement fait que ces 3 bits d'ordre inférieur adressent séquentiellement chacun des 8 bits du moyen sélectionné 65. Si aucune position de bit dans le multiplet n'est à « 1 », le processus d'incrémentation fait que chacun des multiplets suivants de la crémaillère de tabulation 64 est adressé jusqu'à ce que soit trouvé un bit « 1 » indiquant une tabulation. A ce stade, le moyen de sélection 65 transmet un signal de localisation de tabulation sur la ligne 68 en direction de la logique de commande de séquence 60 qui, à son tour, transmet un signal à la mémoire de microinstructions ROS 36 qui, à son tour, envoie une instruction dans l'unité ALU 39 à partir de laquelle on obtiendra dans le registre de positions horizontales 51 la valeur qui représente la position tabulée à emmagasiner dans la mémoire d'instructions d'affichage 30 en tant que position « passer à », par exemple, « PASSER A LA POSITION D'ÉCHAPPEMENT HORIZONTAL 95 ».

On va maintenant étudier la séquence des opérations lorsque, durant le cycle initial après un changement de l'information à afficher, la représentation du caractère suivant chargé depuis la mémoire de texte 33 dans l'unité de décodage de caractères 46 de la manière décrite préalablement, s'avère être un code de retour de chariot. L'unité 46, après la détection de ce code de retour de chariot, met en route l'opération de retour de chariot en transmettant un signal représentant un code non graphique spécial sur le bus de fonction spéciale 59 en direction de la commande logique de séquence 60 qui, alors, envoie un signal à la mémoire de microinstructions 36 par le bus 61, ce qui fait que la mémoire 60 envoie son état à l'unité ALU 39, par les bus 62 et 40. En même temps, l'unité 46 transmet un signal qui indique son état de retour de chariot à l'unité ALU 39, par les bus 63 et 41. Les sorties provenant de l'unité 46 et de la mémoire de microinstructions 36 dans l'unité ALU 39 résultent sur le bus 43 en une seule sortie qui est renvoyée à la mémoire de microinstructions 36 qui, par le compteur d'adresses 37 et le registre 38, indique la séquence de microinstructions emmagasinée dans la mémoire 36 alors nécessaire pour procéder au code de retour de chariot.

La séquence implique l'accès aux données d'espacement de ligne emmagasinées dans la mémoire bloc-notes 44 et la transmission de ces données sur le bus 41 en direction de l'unité ALU 39 où elles sont combinées avec l'entrée correspondant à la dernière position verticale du chariot provenant du registre de positions verticales 54, par les bus 56 et 40. La sortie provenant de l'ALU 39 est transmise sur le bus 43 et, ensuite, est rechargée dans le registre de positions verticales 54 en tant que nouvelle position verticale du support. Ensuite, pour déterminer la position horizontale initiale de retour de chariot, la position de marge gauche est retirée de la mémoire bloc-notes 44 et passe par le bus 41 et par l'unité ALU 39 pour être chargée dans le registre de positions horizontales 51. S'il ne doit pas y avoir de retrait, cette position représente la position initiale de retour de chariot, et la mémoire de microinstructions ROS 36 transmet à son tour une instruction dans l'unité ALU 39 qui fournit finalement les valeurs du registre de positions verticales 54 et du registre de positions horizontales 51, valeurs qui représentent la position du retour de chariot à emmagasiner dans la mémoire d'instructions d'affichage 30 en tant que position « passer à », par exemple « PASSER A LA LIGNE 45, POSITION D'ECHAPPEMENT 15 ».

Cependant, il advient souvent que la ligne sur laquelle se fait le retour de chariot a un point initial en retrait. Etant donné que cette ligne est en retrait, le nombre des niveaux de retrait est emmagasiné dans la mémoire bloc-notes 44. En outre, pour la ligne particulière où il y a retrait, un bit de tabulation « 1 » est emmagasiné à chaque position de bit respective de la crémaillère de tabulation 64 jusqu'à ce que soit atteinte la position de retrait. Ensuite, en utilisant la séquence des opérations de détection de tabulation décrite préalablement, on passe par chacune des positions de tabulation. Si par exemple, le retrait correspond à 5 positions d'échappement à partir de la marge gauche, 5 bits « 1 » consécutifs sont emmagasinés pour la ligne particulière dans la crémaillère de tabulation 64 et la routine de recherche de tabulation décrite est exécutée 5 fois. Après communication à la mémoire de microinstructions 36, du signal correspondant à la cinquième tabulation sur la ligne 68 en direction de la commande 60, comme cela a été préalablement décrit, la mémoire de microinstructions transmet une instruction dans l'unité ALU 39 qui fournit finalement les valeurs du registre de positions horizontales 51 et du registre de positions verticales 54 emmagasinées dans la mémoire d'instructions d'affichage 30 en tant que position « passer à », par exemple, « PASSER A LA LIGNE 45, POSITION D'ÉCHAPPEMENT HORIZONTAL 20 ».

Le fonctionnement du système de la présente invention va maintenant être décrit en référence aux figures 4-7. On suppose que l'opératrice, en utilisant les facilités décrites préalablement, a, à l'aide du clavier, mis à jour l'affichage de sorte que le texte alpha-numérique à afficher apparaisse sur la Figure 4 sous la forme suivant laquelle il doit apparaître sur l'écran CRT. Ainsi, l'opératrice a-t-elle communiqué avec la mémoire tampon de texte si bien que dans celle-ci se trouve l'information mise suivant la séquence représentée sur la Figure 5. Comme cela a été mentionné préalablement, pendant le temps où ces modifications sont apportées au texte, la commande de rafraîchissement 11 est à l'arrêt. Le microprocesseur principal (Figure 1) met à jour la mémoire tampon de texte en insérant de nouveaux caractères à leur position appropriée. Ainsi, le processeur principal 10 initie la mémoire tampon d'instructions d'affichage 13 de sorte qu'elle soit prête pour l'opération de prébalayage (PRSCN). A ce stade, le microprocesseur 10 libère les circuits électroniques de rafraîchissement de leur état d'arrêt en supprimant la sortie provenant de la ligne d'arrêt de demande 17. La mémoire tampon d'instructions d'affichage est alors prête pour l'opération de prébalayage et contient la séquence d'instructions illustrée à la Figure 6.

Lorsque la mémoire tampon d'instructions d'affichage est chargée de la façon représentée sur la Figure 6, elle transmet une série d'instructions qui commandent la commande de rafraîchissement 11 (Figure 1 ou Figure 2) pour une opération de prébalayage. L'instruction initiale dans la mémoire tampon d'instructions d'affichage « LD DI STRT » provoque simplement le chargement de l'instruction (à la section 70) dans la séquence d'instructions qui est constante pour une opération d'affichage quelconque, ces instructions pouvant être, par exemple, des instructions de cadrage. L'instruction suivante « BRNCH INT », représentée par la flèche 71, conduit à une série d'instructions qui amorcent une opération de balayage ou de prébalayage, par exemple une instruction LD HRZ produit le chargement dans le registre de positions horizontales 51 (Figure 2), de la position horizontale de « L » 72 (Figure 4) qui est le caractère initial de l'affichage. Ensuite, l'instruction « LD VRT » provoque le chargement de la position verticale du caractère 72 dans le registre de positions verticales 54, comme cela a été décrit préalablement. Ensuite, l'instruction LD TSB STRT et l'instruction suivante « LD TSB BD » identifient les instructions TSB STRT (73) et TSB ND (74) dans la séquence des instructions de la mémoire tampon (Figure 5).

L'instruction suivante « PRCN » amorce l'opération de prébalayage en utilisant l'appareil décrit préalablement en référence à la Figure 2 pour balayer la séquence de données alpha-numériques et de positions dans la mémoire tampon de texte 12 (Figure 5) et pour emmagasiner en surcharge (OVRWT) la séquence des instructions indiquées dans la mémoire tampon d'instructions d'affichage 13 (Figure 6) parmi lesquelles se trouvent l'instruction de prébalayage elle-même ainsi que d'autres instructions éventuelles 75.

A la suite de ce prébalayage et de cet emmagasinage en surcharge, la mémoire tampon d'instructions d'affichage 13 se trouve avoir la séquence des instructions illustrées sur la Figure 7 à laquelle on va maintenant se reporter pour le cycle de rafraîchissement répétitif de l'équipement. Dans tous les cas, en repassant aux opérations de prébalayage décrites en référence aux Figures 5, 6 et 7, on peut observer que dans la première étape d'instructions, l'instruction de prébalayage elle-même est surchargée par l'instruction 76, Figure 7, à savoir de l'instruction de « position de faisceau » (POS BM). L'instruction suivante est l'instruction « LD TXT PTR ». Une fois cette instruction introduite dans le prébalayage, le pointeur 77 (Figure 5) est fixé de manière à indiquer le premier caractère alphanumérique « L » et les caractères de la mémoire tampon de texte 12 sont mis en séquence de la façon décrite préalablement en référence à la Figure 3 en envoyant successivement ces caractères dans la mémoire ROS de décodage de caractères 46 (Figure 2) tandis qu'une impulsion de mise au repos est appliquée au générateur de segments de caractère 47, par la ligne 77, en provenance de la logique de séquence 60 afin de maintenir l'affichage à l'état de repos, c'est-à-dire de non-affichage, durant l'opération de prébalayage. Même si le tube cathodique CRT est maintenu à l'état de repos durant cette opération de prébalayage, une instruction de départ d'affichage (STRT DSP) 78 est écrite dans la mémoire tampon d'instructions d'affichage pour être utilisée durant le cycle de rafraîchissement (Figure 7) au point qui coïncide avec la mise en séquence des caractères provenant de la mémoire tampon de texte 12 (Figure 5). Durant cette opération de prébalayage, la représentation codée des caractères est mise en séquence dans la mémoire de décodage de caractères 46 de la manière décrite préalablement, et le système décode ces caractères pour donner finalement une sortie transmise sur le bus 23 au générateur de segments de caractère 47. Cependant, étant donné que le générateur 47 et, par voie de conséquence, les circuits électroniques d'affichage CRT 49 sont à l'état de repos à la suite du signal présent sur la ligne 77, aucun caractère alpha-numérique n'est affiché durant ce cycle de prébalayage.

A ce stade, le code de caractère 79 provenant de la mémoire tampon de texte (Figure 5) « (CR) » indique un retour de chariot. Lorsque le code représentant ce retour de chariot est envoyé à l'unité 46, comme cela a été décrit préalablement, le système calcule la position du retour de chariot qui est la position du caractère « O » 80 dans l'affichage de la Figure 4. Cette séquence de retour de chariot implique un accès aux données d'espacement de lignes présentes dans la mémoire bloc-notes 40 et la transmission de données par l'entremise de l'unité ALU 39 où elles sont ajoutées à la dernière position verticale de chariot provenant du registre de positions 54 qui est alors mis à jour pour donner la nouvelle position verticale.

Ensuite, pour déterminer la position horizontale initiale du retour de chariot, la position de marge gauche est retirée de la mémoire bloc-notes 44 et envoyée dans l'unité ALU 39 où elle est combinée au nombre de retraits emmagasiné également dans la mémoire 44 afin de calculer la position de retrait finale du caractère « O » 80 (Figure 4). Cette valeur horizontale de retour de chariot mise à jour est chargée dans le registre de positions horizontales 51. Lorsque ces opérations sont réalisées, l'instruction 81 (POS BM XY) est chargée dans la mémoire tampon d'instructions d'affichage pour qu'elle puisse être utilisée durant le prochain cycle de rafraîchissement. Cette instruction, en fait, indique au faisceau du tube cathodique de passer à une position définie qui est déterminée par les positions verticale et horizontale mises à jour alors chargées dans les registres 54 et 51. Après cette instruction, l'instruction 82 « STRT DSP » est écrite dans la mémoire tampon d'instructions d'affichage (Figure 7) pour être utilisée durant le rafraîchissement. Cette opération amorce l'affichage où le caractère « O » 80 apparaît à la position de retour de chariot durant le cycle de rafraîchissement.

Durant le prébalayage suivant, les caractères « OUT-96 » sont mis en séquence dans l'unité de décodage de caractères 46 de la manière décrite préalablement tandis que le signal de mise au repos est toujours maintenu sur la ligne 77 ; après quoi, le code de caractère « (TAB) » est décodé dans l'unité 46 (Figure 2). Cette opération déclenche l'opération de tabulation décrite préalablement en référence à la Figure 2 dans laquelle, en utilisant la crémaillère de tabulation 64 et les moyens de sélection 65, la position suivante de tabulation est calculée et sa valeur est emmagasinée dans le registre de positions horizontales 51. A ce stade, l'instruction 84 est emmagasinée dans la mémoire tampon d'inctructions d'affichage 13 (Figure 7) pour être utilisée ensuite durant le cycle de rafraîchissement. A la suite de cette instruction, les circuits électroniques d'affichage amènent le faisceau CRT à la position horizontale qui est contenue dans le registre de positions horizontales 51 après que le calcul de tabulation a été effectué. Cette position est, bien entendu, la position horizontale du caractère alpha-numérique N 83 (Figure 4). Ensuite, l'instruction 85 « STRT DSP » est écrite dans la mémoire d'instructions d'affichage pour être utilisée dans le cycle de rafraîchissement (Figure 7).

Toujours durant l'opération de prébalayage, les codes des caractères « NON-60 » sont mis en séquence dans l'unité 46, comme cela a été décrit préalablement, tandis que l'impulsion de mise au repos est toujours maintenue sur le bus 77 (Figure 2). Etant donné qu'aucun autre calcul n'est nécessaire durant le prébalayage, ce dernier est terminé en ce qui concerne les caractères affichés sur la Figure 4. Etant donné que le prébalayage est terminé, une instruction de « mise au repos » est chargée dans la mémoire tampon d'instructions d'affichage 13 pour signaler la réalisation d'un cycle de rafraîchissement.

On va maintenant étudier un cycle de rafraîchissement dans lequel l'affichage est actif et non pas au repos afin de déterminer la façon dont fonctionne la portion surchargée de la mémoire tampon d'instructions d'affichage. En référence aux Figures 5 et 7, l'instruction « POS BM » 76 fait que le faisceau CRT est placé à la position correspondant au premier caractère « L » 72. Le pointeur de texte 77 (Figure 5) est chargé par la mémoire tampon d'instructions d'affichage si bien qu'il indique une représentation emmagasinée du caractère « L ». Ensuite, la mémoire tampon d'instructions d'affichage envoie l'instruction « STRT DSP » 78 qui fait qu'un signal de segment remplace le signal de mise au repos sur le bus 77 69 et est envoyé aux circuits électroniques d'affichage CRT et au générateur de segments de caractère (Figure 2) ce qui a pour résultat de mettre en séquence la série de caractères provenant de la mémoire tampon d'emmagasinage de texte 12, dans l'unité 46. Comme cela a été décrit pour chaque caractère, l'unité ROS de décodage de caractères 46 envoie au générateur de codes de caractère 47 et aux circuits électroniques d'affichage CRT 49, par la mémoire tampon 23, les signaux nécessaires pour actionner les circuits électroniques d'affichage pour qu'ils tracent le caractère alpha-numérique à afficher sur le tube CRT selon une série de segments. Ceci a pour résultat d'afficher la première ligne sur le tube cathodique CRT de la Figure 4. Ensuite, lorsque l'unité 46 détecte le code de retour de chariot (CR) 79 provenant de la mémoire tampon de texte 12, ce qui a pour résultat qu'un signal de code non graphique spécial sur le bus de fonction spéciale 57 est appliqué à la logique de commande de séquence 60, et que cette unité 46 envoie en même temps sur le bus 63 une valeur à 7 bits qui spécifie le code non graphique comme étant un code de retour de chariot appliqué à l'unité ALU 39. Ces deux opérations provoquent le renvoi d'une sortie sur le bus 43 en direction de la mémoire de microinstructions 36, qui, à son tour, renvoie une instruction, par l'unité ALU 39, à la mémoire tampon d'instructions d'affichage 13 afin d'avoir accès dans cette mémoire à l'instruction suivante 81 qui consiste à placer le faisceau à la position de retour de chariot indiquée qui a été préalablement calculée et enregistrée. Lorsque cette opération est réalisée, l'instruction 82 provenant de la mémoire tampon d'instructions d'affichage 13 (Figure 7) commence l'affichage à la position de retour de chariot 80 (Figure 4) et la séquence de caractères « YES-96 » provenant de la mémoire tampon d'emmagasinage de texte 12 passe dans l'unité 46 comme cela a été décrit préalablement pour provoquer finalement l'affichage des caractères alpha-numériques correspondants, comme le montre la Figure 4.

A ce stade, le code de tabulation « Tab » 82 provenant de la mémoire tampon de texte 12 est envoyé dans l'unité ROS de décodage de caractères 46. A nouveau, un signal représentant une fonction spéciale est envoyé sur le bus de fonction spéciale 59 en direction de la logique de commande de séquence 60 alors que, dans le même temps, l'unité de décodage de caractères 46 transmet un signal indiquant la fonction de tabulation à l'unité ALU 39, par le bus 63. Il s'ensuit que l'unité ALU 39 adresse, dans la mémoire de microinstructions 36, une instruction qui, à son tour, à nouveau par l'entremise de l'unité ALU 39, indique dans la mémoire tampon 13 l'instruction 34 qui amène le faisceau à la position de tabulation préalablement calculée qui correspond à la position 83 dans l'affichage représenté sur la Figure 4. A ce stade, les représentations codées des caractères « NON-60 » sont mises en séquence dans l'unité ROS 46 après l'instruction de « STRT DSP » 85 (Figure 7) et le reste de la seconde ligne « NON-60 » est affiché sur le tube CRT de la Figure 4.

**Revendications**

1. Système de traitement de texte par affichage comprenant un clavier (16) pour entrer initialement un texte formé de caractères et ensuite apporter des modifications à ce texte, un tube cathodique (15) dans lequel les caractères sont formés et rafraîchis périodiquement suivant une séquence de positions sélectionnées sur plusieurs lignes, des moyens de déflexion (49) pour déplacer le faisceau du tube cathodique sur ladite séquence de positions sélectionnées en référence à un premier et à un second axes de coordonnées, des moyens de définition de caractères (47) pour commander lesdits moyens de déflexion (49) à chaque position sélectionnée selon une configuration représentant un caractère sélectionné, une mémoire de texte (12) pour emmagasiner la suite des représentations codées des caractères de texte ainsi que des codes de contrôle lorsqu'ils sont entrés initialement au clavier (16) ou lorsque des corrections sont apportées au texte également par l'intermédiaire dudit clavier (16), et des moyens de décodage (46) pour en réponse au décodage de la représentation codée d'un caractère dans ladite mémoire de texte, engendrer des signaux représentant un caractère sélectionné et appliquer lesdits signaux auxdits moyens de définition de caractère (47), ledit système étant caractérisé en ce que :

des moyens de position et de calcul (36, 39) calculent en réponse au décodage par lesdits moyens de décodage (46), d'un code de tabulation emmagasiné dans ladite mémoire de texte (12), la position de tabulation du caractère suivant à afficher par rapport audit premier axe de coordonnée, uniquement durant le cycle initial pendant lequel sont formés ou corrigés les caractères du texte,

une mémoire d'instructions d'affichage (13) emmagasine, durant un cycle de prébalayage faisant suite au cycle initial, une instruction de commande pour chacune des positions de tabulation calculées pendant ledit cycle initial, et

lesdits moyens de décodage (46) provoquent, lors du décodage d'un code de tabulation dans ladite mémoire de texte (12) uniquement pendant les cycles de rafraîchissement, l'accès par lesdits moyens de position et de calcul (36, 39) à l'instruction de commande correspondante se trouvant dans ladite mémoire d'instructions d'affichage (13) de façon à engendrer des signaux représentant le caractère suivant à la position de tabulation définie par ledit code de tabulation.

2. Système selon la revendication précédente dans lesquel lesdits moyens de position et de calcul (36, 39) calculent, en réponse au décodage par lesdits moyens de décodage (46) d'un code de retour de chariot, la position du caractère suivant à afficher par rapport auxdits premier et second axes de coordonnées, uniquement durant le cycle initial pendant lequel sont formés ou corrigés les caractères du texte

ladite mémoire d'instructions d'affichage (13) emmagasine durant ledit cycle de prébalayage, une instruction de commande pour chacune des positions de retour de chariot calculées pendant ledit cycle initial, et

lesdits moyens de décodage (46) provoquent, lors du décodage d'un code de retour de chariot, dans ladite mémoire de texte (12), uniquement pendant les cycles de rafraîchissement, l'accès par lesdits moyens de position et de calcul à l'instruction de commande correspondante se trouvant dans ladite mémoire d'instructions d'affichage (13) de façon à engendrer des signaux représentant le caractère suivant à afficher à la position définie par ledit code de retour de chariot.

**Claims**

1. A text processing display system including a keyboard (16) to initially key-in a text formed of characters and, then to bring modifications to said text, a cathode ray tube (15) wherein the characters are formed and cyclically refreshed in a sequence of selected positions along a plurality of lines, deflection means (49) for moving the cathode ray tube through said sequence of selected positions with reference to a first and a second coordinate axes, character definition means (47) for bringing said deflection means (49) to each selected position in a pattern representative of a selected character, a text storage (12) for storing the sequence of the coded representations of the characters of the text'as well as control codes when they are initially keyed in a keyboard 16 or when corrections are made on the text also through intermediary of said keyboard 16, and decoding means (46) for generating, in response to decoding the coded representation of a character in said text storage, signals representative of a selected character, and applying said signals to said character definition means 47, said system being characterized in that :

calculation and position means (36, 39) which, in response to the decoding by said decoding means 46 of a tab code stored in said text storage (12), calculate the tab position of the next following character to be displayed with respect to said first coordinate axis, only during the initial cycle during which the text characters are formed or corrected,

a display instruction storage (13) for storing during a prescan cycle following the initial cycle a control instruction for each of the tab positions calculated during said initial cycle, and

said decoding means (46) cause, during decoding a tab in said text storage only during the refresh cycles, the acces by said postion and calculation means (36, 39) to the corresponding control instruction in said instruction display storage (13) so as to generate signals representative of the next following character at the tab position defined by said tab code.

2. A system according to the preceding claim, wherein said position and calculation means (36, 39) calculate, in response to decoding a carriage return code by said decoding means (46) the position of the next following character to be displayed with respect to said first and second coordinate axes, only during the initial cycle during which the text characters are formed or corrected

said display instruction storage stores, during said prescan cycle, a control instruction for each of the carriage return positions calculated during said initial cycle, and

said decoding means (46) cause, during decoding a carriage return code, in said text storage 12, only during the refresh cycles, the access by said position and calculation means to that corresponding control instruction which is in said display instruction storage (13) so as to generate signals representative of the next following character to be displayed at the position defined by said carriage return code.

**Ansprüche**

1. System der Textverarbeitung durch Anzeige mit einer Tastatur (16) für die anfängliche Eingabe eines aus Zeichen bestehenden Textes, und die spätere Vornahme von Änderungen an diesem Text, mit einer Kathodenstrahlröhre (15), in der die Zeichen gebildet und regelmässig aufgefrischt werden, nach einer Frequenz von ausgewählten Positionen auf mehreren Zeilen, Ablenkmitteln (49) für die Verschiebung des Kathodenstrahls auf die genannte Sequenz ausgewählter Positionen, bezogen auf eine erste und eine zweite Koordinatenachse, mit Mitteln für die Definition von Zeichen (47) für die Steuerung der genannten Ablenkmittel (49) in jede ausgewählte Position nach einer Anordnung, welche ein ausgewähltes Zeichen darstellt, einen Textspeicher (12) für die Speicherung der Folge der kodierten Darstellungen der Textzeichen sowie der Kontrollcodes, wenn sie anfänglich über die Tastatur (16) eingegeben werden, oder wenn ebenfalls mit Hilfe der genannten Tastatur (16) Korrekturen am Text vorgenommen werden, und Dekodiermittel (46), um in Antwort auf die Dekodierung der kodierten Darstellung eines Zeichens im genannten Textspeicher Signale zu erzeugen, welche ein ausgewähltes Zeichen darstellen, und die genannten Signale an die genannten Zeichendefinitionsmittel (47) anlegen, wobei das System dadurch gekennzeichnet ist, dass :

Positions- und Rechenmittel (36, 39) in Antwort auf die Dekodierung durch die besagten Dekodiermittel (46), mit Hilfe eines Tabulaturkode, der im genannten Textspeicher (12) gespeichert ist, die Tabulatorposition des nächsten anzuzeigenden Zeichens in Bezug auf die besagte erste Koordinatenachse berechnen, nur während des Anfangszyklus, während dessen die Textzeichen gebildet oder berichtigt werden, ein Anzeigeanweisungsspeicher (13) während eines Vorabtastzyklus, der auf den Anfangszyklus folgt, eine Steueranweisung für jede der berechneten Tabulaturpositionen während des besagten Anfangszyklus speichert, und dass

die besagten Dekodiermittel (46) beim Dekodieren eines Tabulaturkodes im genannten Textspeicher (12) nur während der Auffrischungszyklen den Zugang durch die besagten Positions- und Rechenmittel (36, 39) zur entsprechenden Steueranweisung bewirken, die sich im genannten Anzeigeanweisungsspeicher (13) befindet, sodass Signale erzeugt werden, welche das nächste Zeichen in der durch den besagten Tabulaturkode festgelegten Tabulaturposition darstellen.

2. System nach dem vorangehenden Anspruch, in dem die besagten Positions- und Berechnungsmittel (36, 39) in Antwort auf die Dekodierung durch die besagten Dekodiermittel (46) für einen Wagenrücklaufkode die Position des nächsten anzuzeigenden Zeichens, bezogen auf die besagten ersten und zweiten Koordinatenachsen berechnen, nur während des Anfangszyklus, indem die Textzeichen gebildet oder korrigiert werden, und

der besagte Anzeigeanweisungsspeicher (13) während des besagten Vorabtastzyklus eine Steueranweisung für jede der während des Anfangszyklus berechneten Wagenrücklaufpositionen speichert und

die besagten Dekodiermittel (46) beim Dekodieren eines Wagenrücklaufkodes im besagten Textspeicher (12) nur während der Auffrischungszyklen den Zugang durch die besagten Positionsund Berechnungsmittel zur entsprechenden Steueranweisung bewirken, die sich im besagten Anzeigeanweisungsspeicher (13) befindet, sodass die Signale erzeugt werden, welche das nächste anzuzeigende Zeichen in der durch besagten Wagenrücklaufkode definierten Position darstellen.

FIG. 1

FIG. 2

FIG. 3

LE VOTE EST :

OUI-96    NON-60

**FIG. 4**

LD DI STRT
BRNCH INT

LD HRZ
LD VT
LD TSB STRT
LD TSB ND
PRSCN

OVR
WT

**FIG. 6**

LD DI STRT
BRNCH INT.

LD HRZ
LD VT
LD TSB STRT
LD TSB ND
POS BM
LD TXT PTR
STRT DSP
POS BM X,Y
STRT DSP
POS BM X
STRT DSP
RLX

**FIG. 7**

TSB STRT
L
E
SP
V
O
T
E
SP
E
S
T
:
:
CR
O
U
I
—
9
6
TAB
N
O
N
—
6
O

TSB ND

**FIG. 5**